Europäisches Patentamt

(19) European Patent Office

Office européen des brevets

(11) Numéro de publication : **0 098 199**
**B1**

(12) **FASCICULE DE BREVET EUROPÉEN**

(45) Date de publication du fascicule du brevet :
07.05.86

(21) Numéro de dépôt : **83401228.8**

(22) Date de dépôt : **15.06.83**

(51) Int. Cl.⁴ : **H 02 K 19/20,** H 02 K 19/06,
**H 02 K 1/24**

(54) **Rotor à tuiles notamment pour machine homopolaire.**

(30) Priorité : **24.06.82 FR 8211050**

(43) Date de publication de la demande :
**11.01.84 Bulletin 84/02**

(45) Mention de la délivrance du brevet :
**07.05.86 Bulletin 86/19**

(84) Etats contractants désignés :
**AT BE CH DE FR GB IT LI NL SE**

(56) Documents cités :
**EP-A- 0 013 157**
**DE-C- 172 336**
**FR-A- 2 185 884**
**FR-A- 2 379 186**
**US-A- 3 599 021**
**US-A- 4 246 505**
**PATENTS ABSTRACTS OF JAPAN, vol. 3, no. 94(E-129), 10 août 1979, page 165E129**

(73) Titulaire : **JEUMONT-SCHNEIDER Société anonyme dite:**
**31-32, Quai de Dion Bouton**
**F-92811 Puteaux Cedex (FR)**

(72) Inventeur : **Laloy, Daniel**
**122bis, rue Roger Salengro**
**F-59460 Jeumont (FR)**

(74) Mandataire : **Lejet, Christian**
**Société JEUMONT-SCHNEIDER 31-32, Quai de Dion Bouton**
**F-92811 Puteaux Cedex (FR)**

Jouve, 18, rue St-Denis, 75001 Paris, France

## Description

La présente invention concerne les machines dynamoélectriques du type homopolaire ou à réluctance variable et, plus particulièrement, les rotors de telles machines ayant un très faible nombre de dents, notamment deux dents.

D'une façon générale, les rotors des machines homopolaires devant fonctionner à très grande vitesse de rotation, sont constitués d'une pièce affectant substantiellement la forme d'un cylindre sur lequel une pluralité d'entailles ont été ménagées longitudinalement, de façon à réaliser des dents qui assurent, lors de la rotation, la pulsation du flux magnétique dans les entrefers.

A très grande vitesse, des irrégularités de surface du rotor résulte une force de frottement due au fluide dans lequel tourne le rotor. Cette force de frottement devient rapidement prohibitive pour les grosses machines.

Une solution bien connue consiste à disposer une chemise cylindrique mince autour du rotor, de manière à réduire ces forces de frottement. Toutefois, cette chemise doit être frettée sur le rotor. De ce fait, lorsque le nombre de dents est faible, par exemple égal à deux, cette chemise se déforme entre les dents, c'est-à-dire dans les entailles ménagées le long du rotor.

Une solution à ce problème est décrite dans le brevet FR-A-2 455 383 selon laquelle, dans chacune des entailles et perpendiculairement à l'axe du rotor, est pratiquée au moins une mortaise dans laquelle s'engage un tenon solidaire d'une ailette métallique reconstituant sensiblement la forme cylindrique de la pièce rotorique sur laquelle les entailles ont été ménagées.

Cette solution, bien que donnant satisfaction, présente l'inconvénient de compliquer la fabrication des rotors et de ne pas être parfaite quant aux forces de frottement.

La présente invention a pour but d'obvier à ces inconvénients.

Selon l'invention, un rotor à deux ou quatre dents pour machines dynamoélectriques notamment du type homopolaire à grande vitesse de rotation, constitué d'une pièce affectant substantiellement la forme d'un cylindre sur lequel une pluralité d'entailles ont été ménagées longitudinalement est caractérisé en ce que, dans chacune desdites entailles est fixée une tuile reconstituant sensiblement la forme cylindrique de ladite pièce sur laquelle lesdites entailles ont été réalisées et sous-tendant une chemise externe serrée contre ledit rotor. De préférence chaque tuile est constituée par un panneau en nid d'abeilles disposé entre deux parois rigides, ou bien collé sur une unique paroi rigide.

Les tuiles sont maintenues aux pièces par l'intermédiaire de joints, par exemple du type bourrelets d'encastrement, de manière à compenser les dilatations différentielles éventuelles.

L'invention sera mieux comprise et d'autres buts, avantages et caractéristiques de celle-ci apparaîtront plus clairement à la lecture de la description qui suit d'un mode de réalisation donné à titre non limitatif et à laquelle une planche de dessins est annexée.

La figure 1 représente, en coupe radiale, le rotor à deux dents, conforme à la présente invention.

La figure 2 représente également en coupe radiale agrandie un détail de la figure 1.

La figure 3 représente en coupe axiale le rotor de la figure 1.

En référence maintenant aux figures, le rotor est constitué d'une pièce 1 affectant substantiellement la forme d'un cylindre sur lequel, dans l'exemple représenté, deux entailles 2 ont été ménagées longitudinalement de façon à réaliser deux dents 3 qui assurent, lors de la rotation du rotor, la pulsation du flux magnétique dans l'entrefer.

Dans chacune des entailles 2 est fixée une tuile 4 dont la paroi externe épouse la forme circulaire des dents du rotor. Ces tuiles 4 ont pour fonction de sous-tendre la chemise externe 5 lorsque celle-ci est en état de serrage important, notamment lors de l'arrêt du rotor.

Bien évidemment, la chemise 5 est conçue de telle façon qu'elle puisse supporter les forces centrifuges dues à sa propre masse et à celle des tuiles lorsque le rotor tourne à grande vitesse. Pour ce faire, le matériau constituant la chemise 5 doit présenter une haute résistance spécifique et un haut module d'élasticité spécifique.

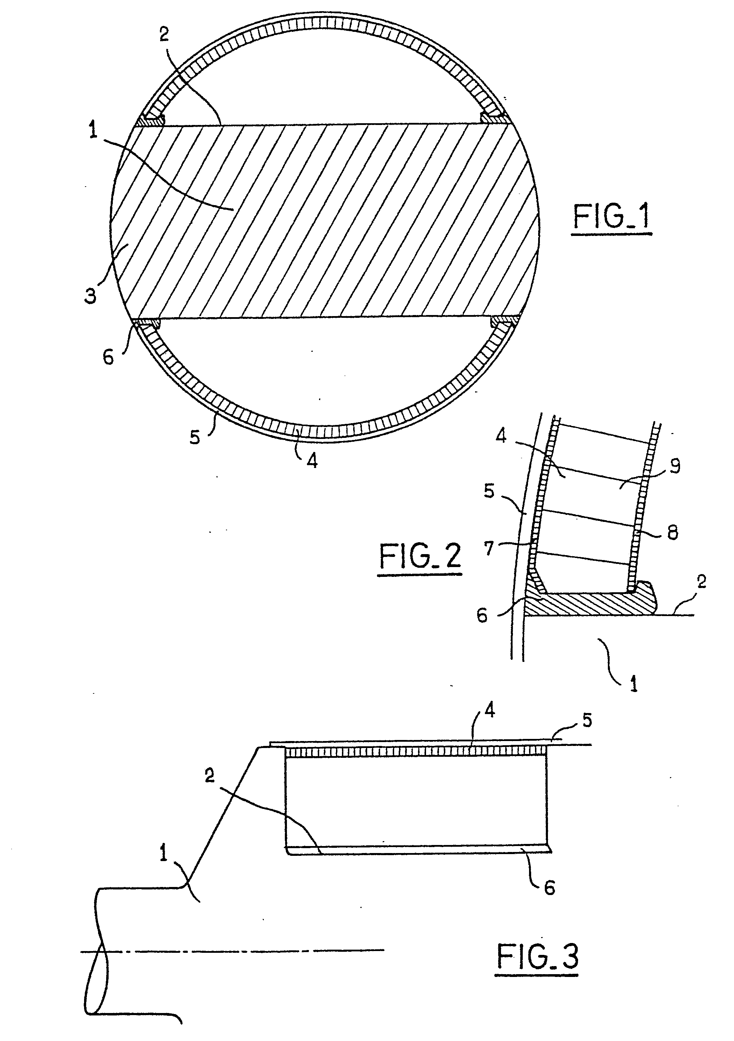

Les tuiles 4 sont constituées par un panneau en nid d'abeilles 9 disposé par exemple entre deux parois rigides 7 et 8 en stratifié (voir figure 2), ou bien collé sur une unique paroi rigide.

Les tuiles 4 sont fixées à la pièce 1 par l'intermédiaire de joints 6 disposés de part et d'autre de chaque tuile ; les joints 6 sont par exemple du type bourrelets d'encastrement de manière à ce que l'on puisse efficacement, lors du montage des tuiles sur le rotor les enduire entièrement de colle, ce qui permet aux divers composants du rotor d'être solidaires les uns des autres avant que la chemise externe 5 soit mise en place. Ces joints 6 sont par exemple réalisés dans un matériau élastomère permettant de compenser des dilatations différentielles éventuelles et de se prémunir de quelques défauts d'aspect des extrémités des tuiles en contact avec eux. On obtient ainsi un rotor dont la paroi extérieure reconstitue sensiblement la paroi cylindrique de la pièce 1 avant que les entailles 2 aient été réalisées.

La chemise 5 est alors mise en place et serrée contre le rotor soit par frettage et cuisson sur le rotor, soit par formage sur mandrin et emmanchement sur le rotor sous températures différentielles comme il est bien connu dans la Technique.

## Revendications

1. Rotor à deux ou quatre dents (3) pour machines dynamoélectriques notamment du type homopolaire à grande vitesse de rotation, constitué d'une pièce (1) affectant substantiellement la forme d'un cylindre sur lequel une pluralité d'entailles (2) ont été ménagées longitudinalement, caractérisé en ce que, dans chacune desdites entailles (2) est fixée une tuile (4) reconstituant sensiblement la forme cylindrique de ladite pièce (1) sur laquelle lesdites entailles (2) ont été réalisées et sous-tendant une chemise externe (5) serrée contre ledit rotor.

2. Rotor selon la revendication 1 caractérisé en ce que ladite tuile (4) est constituée par un panneau en nid d'abeilles (9) disposé entre deux parois rigides (7, 8) aussi bien que collé à une unique paroi rigide.

3. Rotor selon la revendication 1 ou 2 caractérisé en ce que ladite tuile (4) est fixée à ladite pièce (1) par l'intermédiaire de joints (6) de manière à compenser les dilatations différentielles éventuelles.

4. Rotor selon la revendication 3 caractérisé en ce que lesdits joints (6) sont du type bourrelets d'encastrement.

## Claims

1. Rotor with two or four teeth (3) for dynamoelectric machines especially of the homopolar type with high rotational speed, comprising a part (1) having substantially the shape of a cylinder in which a plurality of cutaways (2) have been made longitudinally, characterised in that in each of the said cutaways (2) there is fixed a tile (4) substantially restoring the cylindrical form of the said part (1) on which the said cutaways (2) have been made, and underlying an external shell (5) clamped against the said rotor.

2. Rotor according to claim 1, characterised in that the said tile (4) is constituted by a honeycomb panel (9) situated between two rigid walls (7, 8) or glued to a single rigid wall.

3. Rotor according to claim 1 or 2, characterised in that the said tile (4) is fixed to the said part (1) by means of gaskets (6) so as to compensate for possible expansion differences.

4. Rotor according to claim 3, characterised in that the said gaskets (6) are of the type having retaining or embedding beads.

## Patentansprüche

1. Rotor mit zwei oder vier Zähnen (3) für elektrische Dynamomaschinen, insbesondere vom gleichpoligen Typ und mit großer Drehgeschwindigkeit, gebildet aus einem Teil (1), welches im wesentlichen die Form eines Zylinders aufweist, an welchem mehrere Einschnitte (2) in Längsrichtung angebracht sind, dadurch gekennzeichnet, daß in jedem der genannten Einschnitte (2) ein ziegelförmiges Element (4) befestigt ist, welches im wesentlichen die Zylinderform des genannten Teiles (1) bildet, an welchem die genannten Einschnitte (2) angebracht sind, unter Aufspannung eines äußeren Mantels (5), der gegen den genannten Rotor angedrückt ist.

2. Rotor nach Anspruch 1, dadurch gekennzeichnet, daß das genannte ziegelförmige Element (4) durch eine Platte (9) mit Wabenstruktur gebildet ist, welche zwischen zwei starren Wänden (7, 8) angeordnet und an eine einzige starre Wand angeklebt ist.

3. Rotor nach Anspruch 1 oder 2, dadurch gekennzeichnet, daß das genannte ziegelförmige Element (4) an dem genannten Teil (1) über Fugen (6) derart befestigt ist, daß eventuelle unterschiedliche Dehnungen kompensiert werden.

4. Rotor nach Anspruch 3, dadurch gekennzeichnet, daß die genannten Fugen (6) vom Typ einer formschlüssigen Wulstverbindung sind.

FIG_1

FIG_2

FIG_3